(19) Europäisches Patentamt
European Patent Office
Office européen des brevets

(11) **EP 2 840 527 A1**

(12) **EUROPEAN PATENT APPLICATION**

(43) Date of publication:
**25.02.2015 Bulletin 2015/09**

(51) Int Cl.:
***G06K 9/00*** *(2006.01)*

(21) Application number: **14170756.2**

(22) Date of filing: **02.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.08.2013 JP 2013172495**

(71) Applicant: **FUJITSU LIMITED**
**Kawasaki-shi,**
**Kanagawa 211-8588 (JP)**

(72) Inventors:
- **Moteki, Atsunori**
  **Kanagawa, 211-8588 (JP)**
- **Niinuma, Koichiro**
  **Kanagawa, 211-8588 (JP)**
- **Matsuda, Takahiro**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **Image processing device and image processing method**

(57) An image processing device, includes a computer processor, the device includes: an acquiring unit configured to acquire an image including a first region of a user; an extracting unit configured to extract a color feature quantity or an intensity gradient feature quantity from the image: a detecting unit configured to detect the first region based on the color feature quantity or the intensity gradient feature quantity; and a selecting unit configured to select whether the detecting unit detects the first region using either the color feature quantity or the intensity gradient feature quantity, based on first information related to the speed of movement of the first region calculated from a comparison of the first regions in a plurality of images acquired at different times.

FIG. 1

**Description**

FIELD

The embodiment discussed herein is related to, for example, an image processing device used to detect the hand and fingers of a user, an image processing method, and an image processing program.

BACKGROUND

Since the past, a method in which a document image is projected using a projector has been used. In recent years, a technology has been developed for actualizing user operation assistance by interactive manipulation being performed on a projected projection image through use of gestures, such as hand and finger movement. For example, an augmented reality (AR) technology has been developed in which, when an arbitrary word included in a projection image is indicated by the hand and fingers, an annotation or the like that is associated with the word is presented.

In the above-described interface, the position of the hand and fingers of the user has to be accurately identified by use of a camera that is fixed to an arbitrary location or a camera that is capable of moving freely. As a method for identifying the position of the hand and fingers, for example, in C. Prema et al., "Survey on Skin Tone Detection using Color Spaces", International Journal of Applied Information Systems, 2(2):18-26, May 2012, published by Foundation of Computer Science, New York, USA, a technology is disclosed in which a hand-area contour is extracted by, for example, a skin-tone color component (color feature quantity) being extracted from a captured image, and the position of the hand and fingers is identified by the hand-area contour.

The above-described method for detecting the position of the hand and fingers of the user using the color feature quantity is characteristic in that calculation load (processing cost) is relatively low and high-speed processing is possible. However, in the method for detecting the position of the hand and fingers of the user using the color feature quantity, erroneous detection may occur in some instances. The embodiment herein aims to provide an image processing device that has improved detection accuracy.

SUMMARY

In accordance with an aspect of the embodiments, an image processing device, includes a computer processor, the device includes: an acquiring unit configured to acquire an image including a first region of a user; an extracting unit configured to extract a color feature quantity or an intensity gradient feature quantity from the image: a detecting unit configured to detect the first region based on the color feature quantity or the intensity gradient feature quantity; and a selecting unit configured to select whether the detecting unit detects the first region using either the color feature quantity or the intensity gradient feature quantity, based on first information related to the speed of movement of the first region calculated from a comparison of the first regions in a plurality of images acquired at different times.

The object and advantages of the invention will be realized and attained by means of the elements and combinations particularly pointed out in the claims. It is to be understood that both the foregoing general description and the following detailed description are exemplary and explanatory and are not restrictive of the invention, as claimed.

In the image processing device disclosed in the present specification, the position of the hand and fingers of a user is able to be accurately identified without depending on background color.

BRIEF DESCRIPTION OF DRAWINGS

These and/or other aspects and advantages will become apparent and more readily appreciated from the following description of the embodiments, taken in conjunction with the accompanying drawing of which:

FIG. 1 is a functional block diagram of an image processing device according to an embodiment;
FIG. 2 is a conceptual diagram of a positive image of a first feature quantity model;
FIG. 3 is a table of an example of a data structure of the first feature quantity model;
FIG. 4 is a table of an example of a data structure of a first region detected by a detecting unit using color feature quantity;
FIG. 5A is a first conceptual diagram of a movement amount of the first region as a result of overlapping of a skin-tone area of a background and the first region;
FIG. 5B is a second conceptual diagram of a movement amount of the first region as a result of overlapping of the skin-tone area of the background and the first region;
FIG. 6 is a first flowchart of a feature quantity selection process performed by a selecting unit;
FIG. 7 is a table of an example of a data structure including the number of fingers detected by the detecting unit and the feature quantity selected by the selecting unit;

FIG. 8 is a table of an example of a data structure used for calculation of a finger vector movement amount by the selecting unit;

FIG. 9 is a table of an example of a data structure including the number of fingers detected by the detecting unit and the feature quantity selected by the selecting unit based on the change quantity of the finger vector;

FIG. 10 is a second flowchart of the feature quantity selection process performed by the selecting unit;

FIG. 11 is a flowchart of image processing performed by the image processing device; and

FIG. 12 is a hardware configuration diagram of a computer that functions as the image processing device according to the embodiment.

DESCRIPTION OF EMBODIMENTS

First, the situation regarding an issue in the conventional technology will be described. This issue has been newly discovered by the present inventors as a result of close examination of the conventional technology and has not been known in the past. It has been found that erroneous detection occurs when the background of a wall surface or a paper surface on which a projection image is projected is of a skin-tone color. A reason for this is that the skin-tone area of the background is erroneously detected as hand and fingers, and accurate identification of the position of the hand and fingers becomes difficult. Therefore, the issue will not occur if the position of the hand and fingers of the user is able to be identified without depending on the background color. In image processing in which the position of the hand and fingers of the user is detected, the following matter has been newly verified through keen verification by the present inventors. For example, when an intensity gradient feature quantity, such as a histogram of oriented gradients (HOG) feature quantity or a local binary pattern (LBP) feature quantity, is used, the skin-tone area of the background and the hand and fingers may be accurately differentiated due to the characteristics of the intensity gradient feature quantity. However, compared to the color feature quantity, the intensity gradient feature quantity involves a higher calculation load. Therefore, a delay occurs in the interactive manipulation performed on a projection image, of which prompt responsiveness is desired, and a problem occurs in that operability of the image processing device decreases. In other words, although the intensity gradient feature quantity has high robustness, another characteristic thereof is that the calculation load is high. Therefore, in terms of practical use, detecting the position of the hand and fingers of the user using only the intensity gradient feature quantity is difficult. On the other hand, the color feature quantity is characteristic in that processing load is low. In other words, the color feature quantity does not have high robustness, but is characteristic in that the calculation load is low.

Focusing on the low calculation load of the color feature quantity and the high robustness of the intensity gradient feature quantity, the present inventors have newly found that, through dynamic selection of the color feature quantity and the intensity gradient feature quantity depending on various circumstances, the position of the hand and fingers of the user is able to be detected with high robustness and low calculation load without depending on the background color.

Taking into consideration the technical features that have been newly found through keen verification by the present inventors, described above, examples of an image processing device, an image processing method, and an image processing program according to an embodiment will be described in detail with reference to the drawings. The examples do not limit the disclosed technology.

(Example 1)

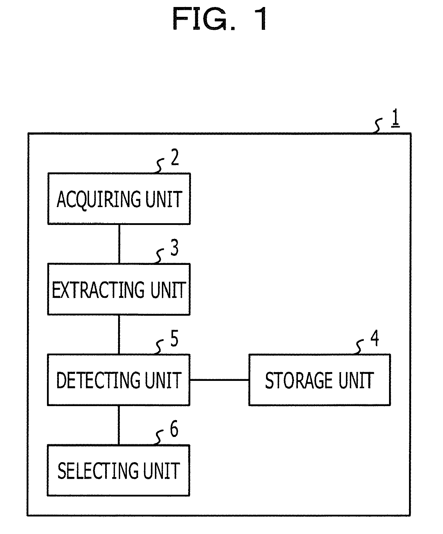

FIG. 1 is a functional block diagram of an image processing device 1 according to an embodiment. The image processing device 1 includes an acquiring unit 2, an extracting unit 3, a storage unit 4, a detecting unit 5, and a selecting unit 6. The image processing device 1 has a communication unit (not illustrated) and is capable of using network resources by performing bidirectional transmission and reception of data with various external devices over a communication line.

The acquiring unit 2 is, for example, a hardware circuit based on wired logic. In addition, the acquiring unit 2 may be a functional module actualized by a computer program executed by the image processing device 1. The acquiring unit 2 acquires an image that has been captured by an external device. The resolution and the acquisition frequency of the images received by the acquiring unit 2 may be set to arbitrary values depending on the processing speed, processing accuracy, and the like requested of the image processing device 1. For example, the acquiring unit 2 may acquire images having a resolution of VGA (640x480) at an acquisition frequency of 30 FPS (30 frames per second). The external device that captures the images is, for example, an image sensor. The image sensor is an imaging device, such as a charge coupled device (CCD) or a complementary metal oxide semiconductor (CMOS) camera. The image sensor captures, for example, an image including the hand and fingers of a user as a first region of the user. The image sensor may be included in the image processing device 1 as occasion calls. The acquiring unit 2 outputs the acquired image to the extracting unit 3.

The extracting unit 3 is, for example, a hardware circuit based on wired logic. In addition, the extracting unit 3 may be a functional module actualized by a computer program executed by the image processing device 1. The extracting unit 3 receives an image from the acquiring unit 2 and extracts the color feature quantity or the intensity gradient feature quantity of the image. The extracting unit 3 may extract, for example, a pixel value in RGB color space as the color feature quantity. In addition, the extracting unit 3 may extract, for example, the HOG feature quantity or the LBP feature quantity as the intensity gradient feature quantity. The intensity gradient feature quantity may be, for example, a feature quantity that is capable of being calculated within a fixed rectangular area. In example 1, for convenience of explanation, the HOG feature quantity will mainly be described as the intensity gradient feature quantity. In addition, for example, the extracting unit 3 may extract the HOG feature quantity, serving as an example of the intensity gradient feature quantity, using a method disclosed in N. Dalal et al., "Histograms of Oriented Gradients for Human Detection", 2005 IEEE Computer Society Conference on Computer Vision and Pattern Recognition (CVPR), 2005. The extracting unit 3 outputs the extracted color feature quantity or intensity gradient feature quantity to the detecting unit 5. When the selecting unit 6 instructs the extraction of only either of the color feature quantity or the intensity gradient feature quantity, as described hereafter, only either of the color feature quantity or the intensity gradient feature quantity may be extracted.

The storage unit 4 is, for example, a semiconductor memory element, such as a flash memory, or a storage device, such as a hard disk drive (HDD) or an optical disc. The storage unit 4 is not limited to the types of storage devices described above, and may be a random access memory (RAM) or a read-only memory (ROM). The storage unit 4 does not have to be included in the image processing device 1. For example, various pieces of relevant data may be stored in a cache, memory, or the like (not illustrated) of each functional unit included in the image processing device 1. In addition, the storage unit 4 may be provided in an external device other than the image processing device 1, via the communication line and using the communication unit (not illustrated) provided in the image processing device 1.

In the storage unit 4, for example, a first feature quantity model (may also be referred to as a classifier) in which the feature quantity of the first region has been extracted in advance is stored in advance by preliminary learning. In addition, in the storage unit 4, various pieces of data acquired or held by each function of the image processing device 1 may be stored as occasion calls. The first feature quantity model may be generated based on the above-described HOG feature quantity or LBP feature quantity. In example 1, the first feature quantity model is described as being generated based on the HOG feature quantity. Preliminary learning is, for example, performed using an image (positive image) in which a target object (the hand and fingers serving as an example of the first region) is captured and an image (negative image) in which the target object is not captured. Various publically known classifier learning methods may be used, such as Adaboost or support vector machine (SVM). For example, as the classifier learning method, a classifier learning method using SVM that is disclosed in the above-mentioned N. Dalal et al., "Histograms of Oriented Gradients for Human Detection", 2005 IEEE Computer Society Conference on Computer Vision and Pattern Recognition (CVPR), 2005 may be used. The intensity gradient feature quantity is a feature quantity that is able to be calculated within a fixed rectangular area, as described above. Therefore, in the positive image, a rectangular area may be prescribed such that the first region (such as the hand and fingers of the user) is disposed with left-right symmetry, and the intensity gradient feature quantity may be calculated within the prescribed rectangular area. In addition, a fingertip position within the rectangular area may also be registered. Furthermore, in the preliminary learning of the classifier, an average value of the fingertip positions in all positive rectangular areas may be calculated as appropriate.

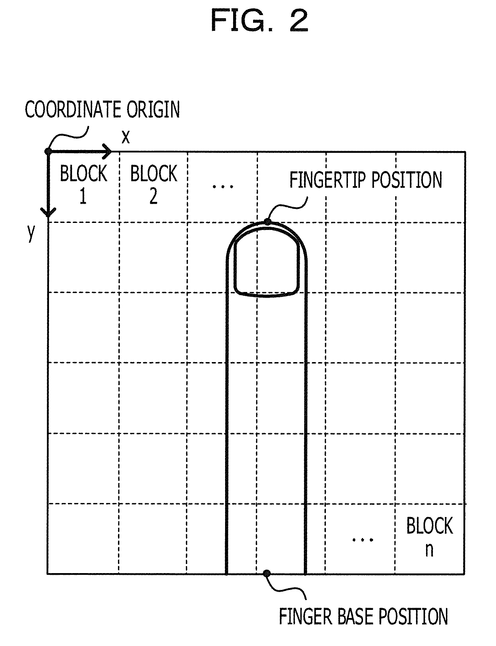

FIG. 2 is a conceptual diagram of a positive image of the first feature quantity model. The first feature quantity model may also be referred to as a classifier, as described above. In the positive image in FIG. 2, for example, an upper left end of the image is set as a coordinate origin. The rightward direction in the image is set as the positive direction of the x axis, and the downward direction in the image is set as the positive direction of the y axis. In addition, the positive image in FIG. 2 is divided into blocks of an arbitrary number. A finger that serves as the first region of the user is captured in a straight state and so as to be disposed with left-right symmetry within the rectangular area. As the positive image in FIG. 2, for example, a plurality of positive images in which a plurality of first regions of the user, lighting conditions, and backgrounds are changed may be used. In addition, during the preliminary learning for the plurality of positive images, the positions of the fingertip may be set such as to be uniformly set in a prescribed coordinate position. In this instance, regardless of which first feature quantity model extracted from the plurality of positive images is used, the fingertip of the user that is actually detected and the fingertip position in the positive image is able to be accurately matched, and the position of the fingertip of the user may be accurately identified. Furthermore, in the positive image illustrated in FIG. 2, a finger base position may be set accordingly, as occasion calls. The finger base position may be set, for example, at a center position of the finger captured near the bottom end of the image.

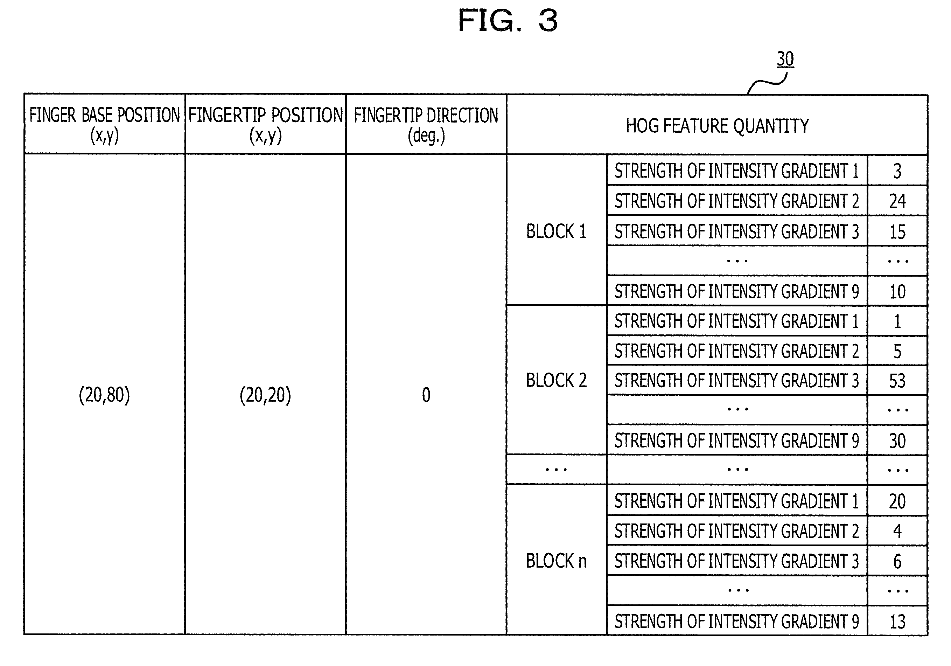

FIG. 3 is a table of an example of a data structure of the first feature quantity model. Table 30 in FIG. 3 stores therein a finger base position field, a fingertip position field, a fingertip direction field, and a HOG feature quantity field. Furthermore, the HOG feature quantity field stores therein the block numbers illustrated in FIG. 2 and a gradient strength field for each divided area formed by dividing each block into nine areas. The number of blocks and the intensity gradient interval of the first feature quantity model are arbitrary parameters, and may be changed accordingly as occasion calls. For example, the first feature quantity model may be divided into areas that are six cells vertically, and six blocks laterally, and the intensity gradient within each block may be classified into a histogram of six levels: 0, 30, 60, 90, 120, and 150 degrees. The strength of the intensity gradient may be normalized, for example, to a value from 1 to 64. The finger base position field and the fingertip position field may store therein, for example, the x coordinate and the y coordinate described with reference to FIG. 2. The fingertip direction may be set, for example, based on the difference between the x coordinates of the finger base position and the fingertip position.

The detecting unit 5 in FIG. 1 is, for example, a hardware circuit based on wired logic. In addition, the detecting unit 5 may be a functional module actualized by a computer program executed by the image processing device 1. The detecting unit 5 receives, from the extracting unit 3, the color feature quantity or the intensity gradient feature quantity extracted by the extracting unit 3. The detecting unit 5 detects the first region based on the color feature quantity or the intensity gradient feature quantity. The detecting unit 5 detects the first region using the color feature quantity or the intensity gradient feature quantity based on selection by the selecting unit 6, described hereafter. In addition, when the first region is detected based on the intensity gradient feature quantity, the detecting unit 5 may reference the first feature quantity model stored in the storage unit 4, as appropriate. Although details of the detecting method of the detecting unit 5 will be described hereafter, at the start of image processing by the image processing device 1, the detecting unit 5 may detect the first region by preferentially using the color feature quantity, taking into consideration the calculation load. The detecting unit 5 outputs, to the selecting unit 6, the number of fingers that has been detected and the feature quantity used for the detection.

(Method for detecting the first region using the color feature quantity by the detecting unit 5)

A method by which the detecting unit 5 detects the first region using the color feature quantity will be described. The detecting unit 5 extracts a skin-tone area using the color feature quantity received from the extracting unit 3, and detects a hand area (combined area of the fingers and the back of the hand) based on the skin-tone area using various publically known methods. For example, the detecting unit 5 may detect the hand area using a method disclosed in Japanese Patent No. 3863809. After detecting the hand area, the detecting unit 5 may recognize the number of fingers in the hand area, and detect the fingers and the fingertip positions from the contour of the hand area. In addition, using a method described hereafter as appropriate, the detecting unit 5 may acquire a center-of-gravity position of the hand area. As a method for calculating the center-of-gravity position, the detecting unit 5 may, for example, calculate a center-of-gravity position Gt (xt,yt) using a following expression, when the coordinates of a pixel Pi within an area Ps extracted as the skin-tone area in an image of a frame t is defined as (xi,t,yi,t) and the number of pixels is defined as Ns.

$$x_t = \frac{1}{N_s} \sum_{P_i \in P_s} x_{i,t}$$

$$y_t = \frac{1}{N_s} \sum_{P_i \in P_s} y_{i,t} \quad \text{.... (1)}$$

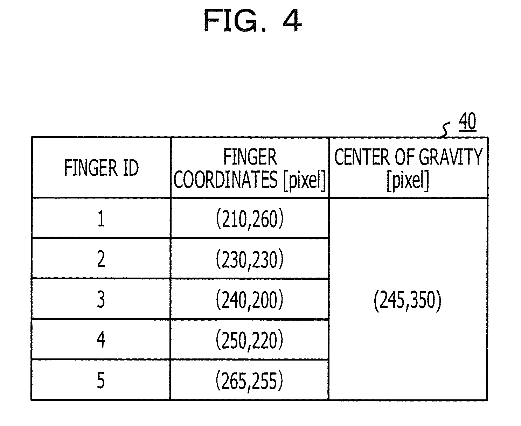

FIG. 4 is a table of an example of a data structure of the first region detected by the detecting unit 5 using the color feature quantity. In the coordinate system in table 40 in FIG. 4, an upper left end of the image acquired by the acquiring unit 2 is set as the point of origin. The rightward direction in the image is set as the positive direction of the x axis, and the downward direction in the image is set as the positive direction of the y axis. For example, table 40 is stored in a cache or a memory (not illustrated) that is provided in the detecting unit 5. In the example illustrated in table 40, the coordinates of the tip portion of each finger and the center-of-gravity position (in pixel units) of when the user has one hand spread open are stored. In table 40, the number of hands that are detected is a single hand. However, the detecting unit 5 may detect two or more hands as occasion calls. In addition, to improve the robustness of detection using the color feature quantity, the detecting unit 5 may detect the first region by combining detection using the intensity gradient feature quantity, described hereafter, as appropriate.

(Method for detecting the first region using the intensity gradient feature quantity by the detecting unit 5)

A method by which the detecting unit 5 detects the first region using the intensity gradient feature quantity will be described. The detecting unit 5 in FIG. 1 may compare the HOG feature quantity, which serves as an example of the intensity gradient feature quantity, received from the extracting unit 3 and the HOG feature quantity in the first feature quantity model stored in the storage unit 4, and detect an object included in an image of which the degree of similarity is a predetermined first threshold (such as 70%) or higher as the first region.

In addition, the detecting unit 5 may perform detection of the hand and fingers serving as the first region using a score. First, the detecting unit 5 performs calculation of the fingertip direction from the fingertip position identified from the color feature quantity. Here, the fingertip direction may, for example, be a direction perpendicular to the contour in the periphery of the fingertip position. Next, the detecting unit 5 sets a predetermined rectangular area based on the fingertip position and the fingertip direction. The detecting unit 5 matches the average fingertip position in the first feature quantity based on preliminary learning with the fingertip position set by the detecting unit 5 using the color feature quantity, and matches the direction of the rectangular area with the fingertip direction calculated earlier. Thereafter, for example, the detecting unit 5 calculates the intensity gradient feature quantity for the inside of the rectangular area using the HOG feature quantity. Next, based on the first feature quantity model, the detecting unit 5 performs estimation of a fingertip likeness using the intensity gradient feature quantity extracted from the rectangular area. For example, for SVM, the output score is a score from -1 to 1. A negative value is indicated when the object is not a finger, and a positive value is indicated when the object is a finger. The detecting unit 5 performs threshold determination of the score. When the score is less than a predetermined threshold, the detecting unit 5 may reject the estimation result. When the score is the threshold or higher, the detecting unit 5 may accept the estimation result. The detecting unit 5 may detect the hand and fingers and calculate the position of the fingertip based on the estimation result.

In addition, to support rotation movement within two-dimensional coordinates of the image acquired by the acquiring unit 2, the detecting unit 5 may perform the detection process on all rotation images using a plurality of rotation images that are rotated by a fixed interval (angle). Furthermore, the detecting unit 5 may limit the retrieval area for the intensity gradient feature quantity using and based on the skin-tone area extracted from the above-described color feature quantity, as occasion calls. In other words, when even a single pixel of a skin-tone area extracted based on the color feature quantity is included within the rectangular area prescribed from the intensity gradient feature quantity extracted by the extracting unit 3, the detecting unit 5 performs a comparison determination with the HOG feature quantity in the first feature quantity model. When a skin-tone area is not included, the detecting unit 5 does not perform the detection process. As a result of the process, the calculation load of the detecting unit 5 is able to be significantly reduced. The detecting unit 5 may identify an averaged fingertip position as the fingertip within the rectangular area detected as the first region (hand and fingers). Furthermore, when a plurality of rectangular areas are detected, the detecting unit 5 may select the rectangular area of which the similarity with the first feature quantity model (may also be referred to as a classifier) is the highest.

The selecting unit 6 in FIG. 1 is, for example, a hardware circuit based on wired logic. In addition, the selecting unit 6 may be a functional module actualized by a computer program executed by the image processing device 1. The selecting unit 6 receives, from the detecting unit 5, the number of fingers detected by the detecting unit 5, the movement amount of the hand and fingers, or the feature quantity used for detection, and calculates first information related to the speed of movement of the hand and fingers that serve as the first region. The first information is information indicating the reliability of the hand and fingers detection result based on the color feature quantity. In other words, when a skin-tone area is present in the background, the reliability of the hand and fingers detection result based on the color feature quantity becomes low. Therefore, the selecting unit 6 selects whether the detecting unit 5 detects the hand and fingers using either the color feature quantity or the intensity gradient feature quantity based on the first information. In addition, the selecting unit 6 may instruct the extracting unit 3 to extract only either of the color feature quantity or the intensity gradient feature quantity, as appropriate.

Next, the technical significance of the first information and the details of the selection process performed by the selecting unit 6 will be described. First, the technical significance of the first information will be described. As a result of keen verification, the present inventors have newly found a phenomenon that is commonly observed when the detection of the hand and fingers and the detection of the position of the fingertip are not accurately performed using the color feature quantity that characteristically has a low calculation loads. The phenomenon is characteristic in that, as a result of the hand and finger area and the skin-tone area of the background being overlapped, the number of fingers increases or decreases within a short amount of time or the position of the fingertip significantly changes within a short amount of time. In other words, as a result of the hand and finger area and the skin-tone area of the background being overlapped, an instance may occur in which the movement amount of the hand and fingers, serving as the first region, within an arbitrary amount of time (may also be referred to as within a third time that is the difference between a first time and a second time) becomes a predetermined threshold (may also be referred to as a first threshold) or higher.

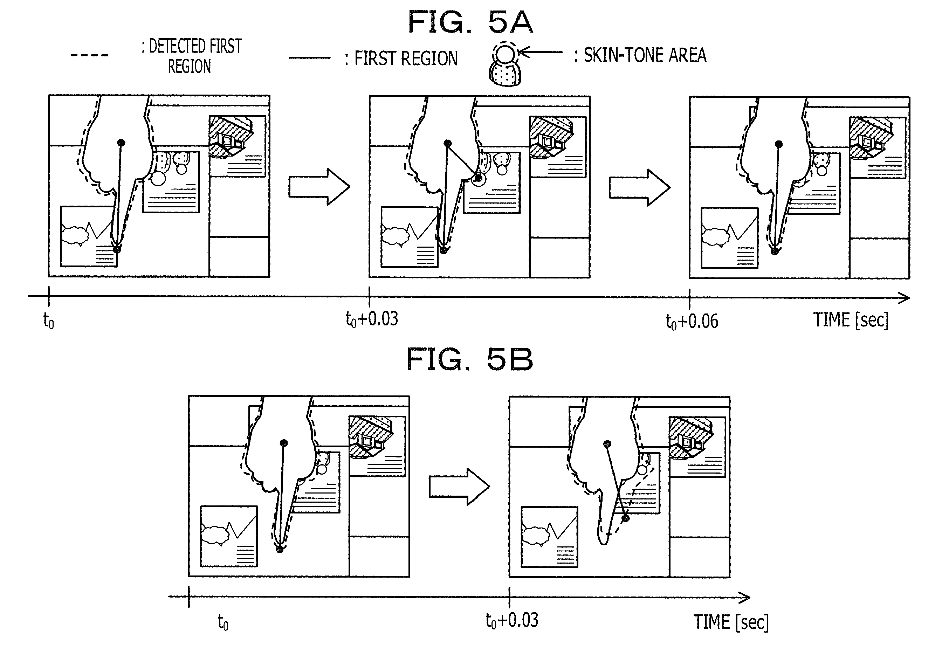

FIG. 5A is a first conceptual diagram of the movement amount of the first region as a result of overlapping of the skin-tone area of the background and the first region. FIG. 5B is a second conceptual diagram of the movement amount of the first region as a result of overlapping of the skin-tone area of the background and the first region. FIG. 5A is a conceptual diagram in which, for example, when the color feature quantity is used, as a result of the hand and finger area and the skin-tone area of the background being overlapped, the number of fingers increases and decreases within a short amount of time. FIG. 5B is a conceptual diagram in which, for example, when the color feature quantity is used, as a result of the hand and finger area and the skin-tone area of the background being overlapped, the position of the fingertip significantly changes within a short amount of time. FIGs. 5A and 5B illustrate the movement amount of the hand and fingers when the detection process speed of the detecting unit 5 is 30 FPS (30 frames processed per second). In addition, in FIGs. 5A and 5B, the number of solid lines drawn from near the base of the back of the hand (near the wrist) indicates the number of detected fingers. The size and direction of the solid line indicates a finger vector. The finger vector may, for example, be set in the length direction of the finger using two arbitrary points (such as the fingertip position and the center-of-gravity position of the hand).

In FIG. 5A, the number of fingers increases from one to two and then decreases again to one during a short amount of time, that is, over three frames (0.06 seconds). A reason for this is that the overlapping of the skin-tone area of the background and the first region occurs at time t0+0.03, and then a non-overlapping state resumes at time t0+0.06. The change is characteristic in that the change occurs during a very short amount of time that is 0.06 seconds, and differs from the ordinary movement speed of a user. In FIG. 5B, the position of the fingertip significantly moves (moves by about 26 pixels) over two frames (0.03 seconds). A reason for this is that, when the overlapping of the skin-tone area of the background and the first region occurs at time t0+0.03, the skin-tone area of the background is erroneously detected as being a part of the hand and fingers, thereby causing the significant change in the position of the fingertip. In a manner similar to that in FIG. 5A, the change is characteristic in that the change occurs during a very short amount of time that is 0.03 seconds, and differs from the ordinary movement speed of a user.

As is understandable from FIGs. 5A and 5B, the color feature quantity is characteristic in that, as a result of the hand and finger area and the skin-tone area of the background being overlapped, the number of fingers increases and decreases during a shorter amount of time or the position of the fingertip significantly moves during a shorter amount of time, compared to an ordinary movement time of the user. In other words, the first information is information related to the speed of movement of the first region calculated from a comparison of the first regions in images acquired at different times. The selecting unit 6 selects whether the detecting unit 5 detects the hand and fingers of the user, serving as the first region, using either the color feature quantity or the intensity gradient feature quantity, based on the first information. As a result, the position of the hand and fingers of the user is able to be detected with high robustness and low calculation load without depending on the background color. In other words, the selecting unit 6 selects the intensity gradient feature quantity when the color feature quantity of a background area of the image other than the first region is similar to the color feature quantity of the first region, and the background area and the first region are determined to be overlapping.

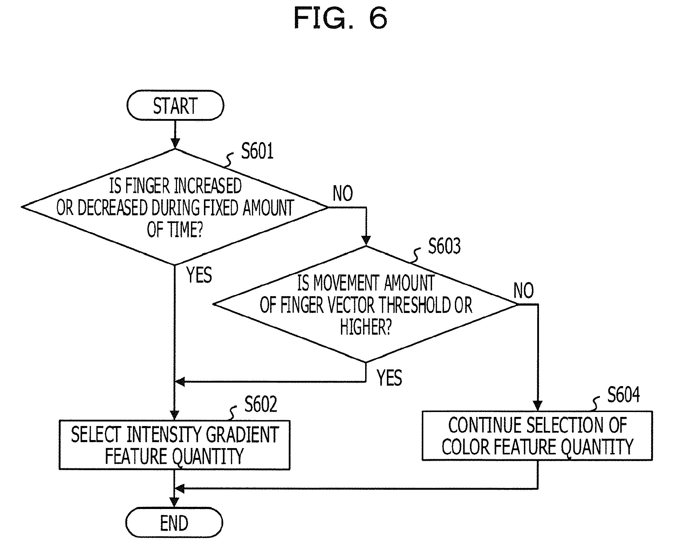

Next, the details of the selection process performed by the selecting unit 6 will be described. For convenience of explanation, in the following description, a state in which the detecting unit 5 detects the first region using the color feature quantity is referred to as a color feature quantity mode. A state in which the detecting unit 5 detects the first region using the intensity gradient feature quantity is referred to as an intensity gradient feature quantity mode. FIG. 6 is a first flowchart of the feature quantity selection process performed by the selecting unit 6. FIG. 6 illustrates the process for determining whether or not to transition from color feature quantity mode to intensity gradient feature quantity mode when the selecting unit 6 has selected color feature quantity mode. The selecting unit 6 may select color feature quantity mode when, for example, the image processing device 1 starts image processing.

In FIG. 6, when the selecting unit 6 has selected color feature quantity mode, the following processes are performed. First, the selecting unit 6 determines whether or not an increase or decrease in the number of fingers has occurred during the hand and finger detection based on the color feature quantity, within a previous fixed amount of time (step S601). The details of the determination process regarding the increase and decrease in the number of fingers will be described hereafter. When determined at step S601 that the number of fingers has increased or decreased (Yes at step S601), the selecting unit 6 selects intensity gradient feature quantity mode (step S602). When determined at step S601 that the number of fingers has not increased or decreased (No at step S601), the selecting unit 6 calculates the movement amount (may also be referred to as a change quantity) of the finger vector based on a different time (such as a previous time (may also be referred to as the second time) and the current time (may also be referred to as the first time)) (step S603). The details of the calculation process for the movement amount of the finger vector will be described hereafter. When determined at step S603 that even any one of the movement amounts of the finger vectors calculated for each finger is a predetermined threshold or higher (Yes at step S603), the selecting unit 6 selects intensity gradient feature quantity mode (step S602). When determined at step S603 that the movement amount of the finger vector is less than the predetermined threshold (No at step S603), the selecting unit 6 continues selection of color feature quantity mode (step S604).

(Determination process regarding the increase and decrease in the number of fingers)

Here, the details of the determination process regarding the increase and decrease in the number of fingers will be described. First, regarding the increase and decrease in the number of fingers, differentiation is desired between when the user intentionally increases the number of fingers (such as when the user extends a finger from a state in which the hand is fisted) and when the number of fingers increases due to erroneous detection as a result of the skin-tone area of the background and the hand and fingers overlapping. Therefore, when the number of fingers has changed at a certain time, the selecting unit 6 checks the increase and decrease in the number of fingers that has occurred at a fixed short time tm prior. For example, when the number of fingers has changed from two to one at time t [sec], the selecting unit 6 checks whether or not the number of fingers has changed from one to two before time t-tm [sec]. If the number of fingers has changed, the selecting unit 6 determines that an increase or decrease in the number of fingers has occurred. The time tm may be set to a value taking into consideration the speed at which a human is able to move a finger. For example, at 30 FPS, under an assumption that a person is not able to (realistically not able to) increase then decrease (or decrease then increase) the number of fingers during 0.06 seconds, tm may be set to 0.06 (over two frames). The time tm may be referred to as the third time. The above-described first threshold may be set, for example, to the change quantity in the number of fingers.

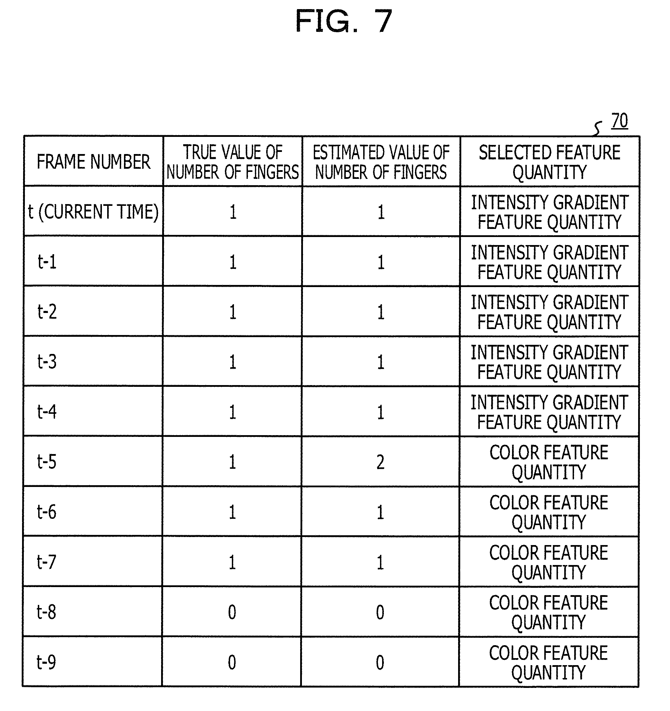

FIG. 7 is a table of an example of a data structure including the number of fingers detected by the detecting unit 5 and the feature quantity selected by the selecting unit 6. In table 70 in FIG. 7, a true value of the number of fingers is the true number of fingers that are able to be objectively observed. An estimated value of the number of fingers is the number of fingers detected by the detecting unit 5. In table 70, during a period in which the frame number is time t-6 to time t-4, the number of fingers detected in color feature quantity mode changes from one to two to one. Therefore, the selecting unit 6 selects intensity gradient feature quantity mode from time t-4. The number of hands detected by the detecting unit 5 may be two or more. In this instance, the selecting unit 6 may perform the selection of color feature quantity mode or intensity gradient feature quantity mode for each hand. Table 70 may, for example, be stored in a cache or a memory (not illustrated) provided in the detecting unit 5.

(Calculation process for the movement amount of the finger vector)

Here, the details of the calculation process for the movement amount of the finger vector will be described. Regarding the movement amount of the finger vector, for example, the vector from the center of gravity of the back of the hand to each finger may be calculated, and the movement amount may be calculated based on the vectors at a previous time and the current time. In addition to size, the finger vector includes a direction component. Therefore, a movement of the finger of the user in an unexpected movement direction (such as the finger moving to the left and right for only a certain amount of time while moving from a downward direction towards an upward direction) may be detected. In addition, in the calculation of the movement amount, if the movement of the fingertip position identified based on the color feature quantity is used, when the hand and fingers move at a high speed, a transition to intensity gradient feature quantity mode may be assumed to occur even in a state in which the transition to intensity gradient feature quantity mode is not desired. On the other hand, as a result of determination being performed using the change quantity of the finger vector, a transition to intensity gradient feature quantity mode when the transition is not used is able to be suppressed.

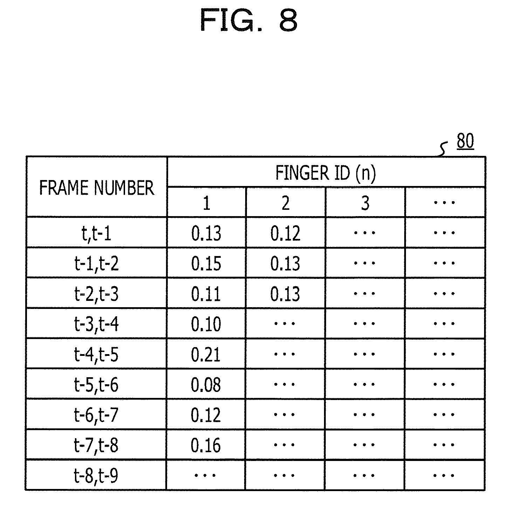

FIG. 8 is a table of an example of a data structure used for calculation of the finger vector movement amount by the selecting unit 6. Table 80 may be stored, for example, in a cache or a memory (not illustrated) provided in the detecting unit 5. In table 80 in FIG. 8, for an arbitrary finger ID (n), the selecting unit 6 calculates the finger vectors Vn, t and Vn, t-1 for a certain time t (may be referred to as the first time) and time t-1 (may be referred to as the second time) of one frame prior. When a plurality of fingers are present, for example, the finger at time t-1 of which the coordinates are closest to the coordinates of the fingertip at time t may be considered to be the same finger. A finger vector change quantity var (Vn,t,Vn,t-1) may be calculated using a following expression.

$$var(V_{n,t}, V_{n,t-1}) = \frac{\left| \left| V_{n,t-1} \right| - \left| V_{n,t} \right| \right|}{\left| V_{n,t-1} \right|} \cdot \frac{1}{\pi} \arccos\left( \frac{V_{n,t} \cdot V_{n,t-1}}{\left| V_{n,t} \right| \left| V_{n,t-1} \right|} \right) \quad \dots (2)$$

In the above-described expression (2), the term in the front half of the right side indicates the difference in the size of the finger vector from the previous frame. The closer the value is to zero, the less the size of the finger vector changes. In addition, in the above-described expression (2), the term in the rear half of the right side indicates a value that is a normalized angle (unit [rad]) formed by the vectors. The closer the value is to zero, the smaller the angle that is formed becomes. In other words, the closer the finger vector change quantity var is to zero, the higher the reliability of the detection result from the detecting unit 5 becomes. In other words, when the change quantity of the finger vector falls below a certain threshold θ, the reliability of the detection result from the detecting unit 5 may be considered high. Various arbitrary methods may be applied as the method for setting the threshold θ. For example, a method may be applied in which a plurality of users are asked to move their hand and fingers in an area in which the background does not include the skin-tone color in advance, and the maximum value of the values of the finger vector change quantity var obtained at this time is used. For example, when the speed of image processing by the image processing device 1 is 30 FPS, if the difference in the size of the finger vector from the previous frame is 0.25 and 15 degrees ($\pi/6$ [rad]) is set as the maximum value of the angle formed by the finger vectors, the threshold $\theta$ is 0.04. In addition, because the threshold indicates the ease with which intensity gradient feature quantity mode is entered, the threshold may be changed accordingly depending on the intended use.

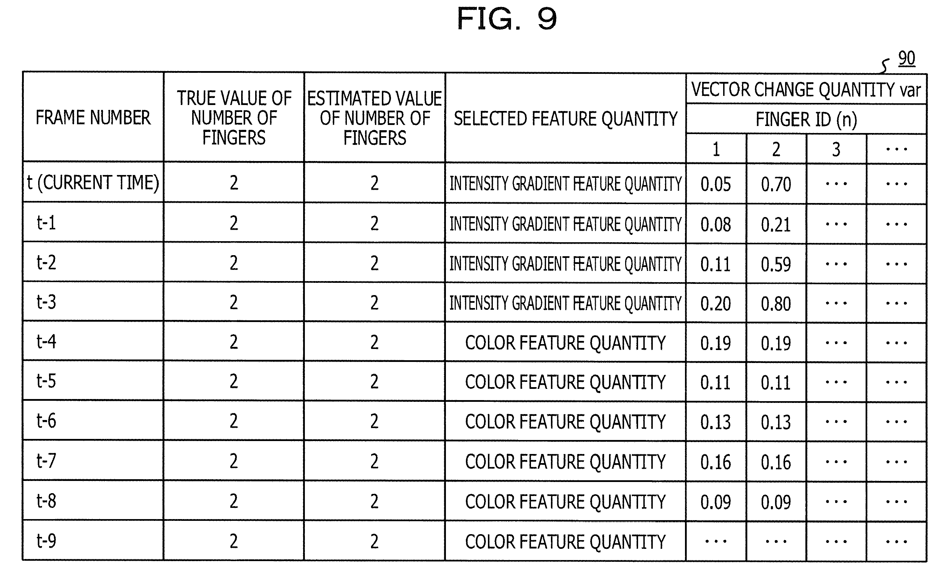

FIG. 9 is a table of an example of a data structure including the number of fingers detected by the detecting unit 5 and the feature quantity selected by the selecting unit 6 based on the change quantity of the finger vector. Table 90 in FIG. 9 may, for example, be stored in a cache or a memory (not illustrated) provided in the detecting unit 5. In table 90, the true value of the number of fingers is the true number of fingers that are able to be objectively observed. The estimated value of the number of fingers is the number of fingers detected by the detecting unit 5. In table 90, the true value of the number of fingers and the estimated value of the number of fingers remain two throughout. However, the finger vector change quantity significantly increases for finger ID(n)=2 from t-4 to t-3. Therefore, the selecting unit 6 changes the selected feature quantity from the color feature quantity to the intensity gradient feature quantity at time t-3.

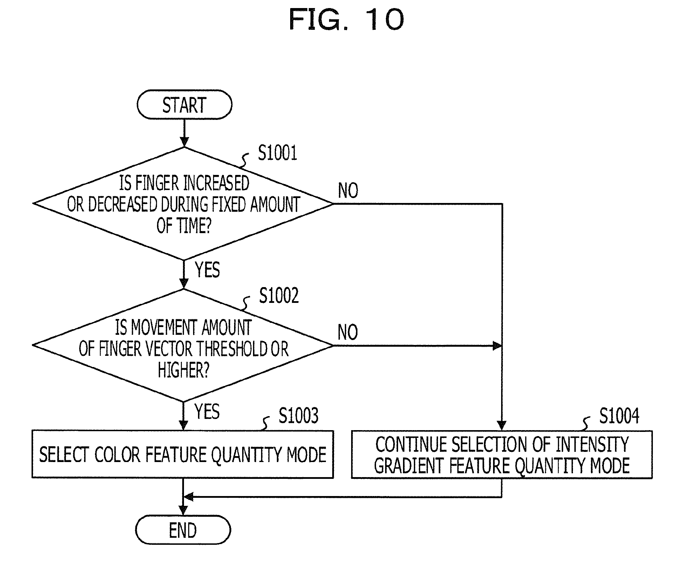

Next, in the first flowchart of the feature quantity selection performed by the selecting unit 6 in FIG. 1, processes performed subsequent to when the selecting unit 6 selects intensity gradient feature quantity mode (step S602) will be described. FIG. 10 is a second flowchart of the feature quantity selection process performed by the selecting unit 6. FIG. 10 illustrates the process for determining whether or not to transition to color feature quantity mode when the selecting unit 6 has selected intensity gradient feature quantity mode.

In FIG. 10, when the selecting unit 6 has selected intensity gradient feature quantity mode, the following processes are performed. First, the selecting unit 6 determines whether or not an increase or decrease in the number of fingers has occurred during the hand and finger detection based on the intensity gradient feature quantity, during an overall time within a previous fixed amount of time th (such as within 0.3 seconds, which amounts to the previous ten frames) (step S1001). When determined at step S1001 that the number of fingers has not increased or decreased (No at step S1001), the selecting unit 6 continues selection of intensity gradient feature quantity mode (step S1004). When determined at step S1001 that the number of fingers has increased or decreased (Yes at step S1001), the selecting unit 6 calculates the change quantity of the finger vector at a previous time and the current time, during the overall time within the previous fixed amount of time th (step S1002). When determined at step S1002 that even any one of the movement amounts of the finger vectors calculated for each finger is a predetermined threshold (th) or higher (Yes at step S1002), the selecting unit 6 selects color feature quantity mode (step S1003). When determined at step S1002 that the movement amount of the finger vector is less than the predetermined threshold (th) (No at step S1002), the selecting unit 6 continues selection of intensity gradient feature quantity mode (step S1004). The threshold (th) is a value that may be adjusted arbitrarily. As a result of the time serving as the threshold being increased, an effect may be achieved in that transition from intensity gradient feature quantity mode to color feature quantity mode becomes difficult. In addition, to support instability in the detection and selection results due to external disturbances, the number of times the determination for transition to color feature quantity mode is made and the number of times the determination for transition suspension is made may be counted during the previous fixed amount of time (th). The time for transition may be used as the threshold (th) only when the number of times the determination for transition is made exceeds the number of times the determination for transition suspension is made.

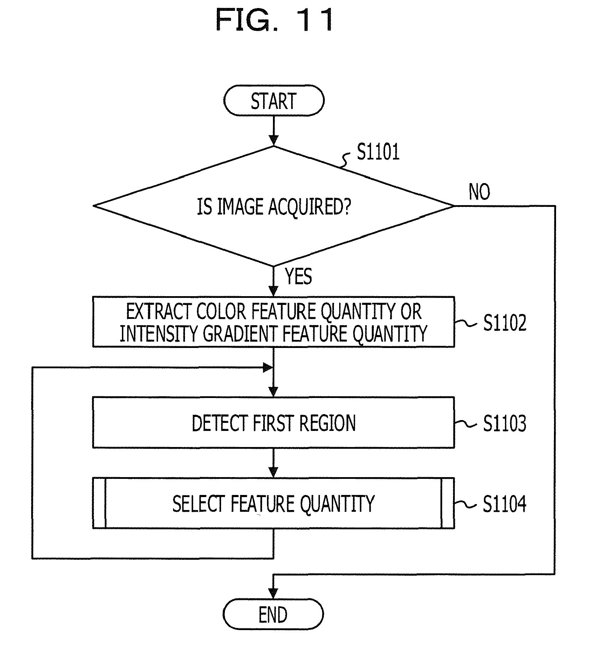

FIG. 11 is a flowchart of image processing performed by the image processing device 1. The acquiring unit 2 acquires, for example, an image captured by the image sensor from the image sensor (step S1101). At step S1101, when the acquiring unit 2 has not acquired an image (No at step S1101), the image processing device 1 ends the processing illustrated in FIG. 11. At step S1101, when the acquiring unit 2 has acquired an image (Yes at step S1101), the acquiring unit 2 outputs the acquired image to the extracting unit 3.

The extracting unit 3 receives the image from the acquiring unit 2 and extracts the color feature quantity or the intensity gradient feature quantity of the image (step S1102). The extracting unit 3 may extract, for example, a pixel value in RGB color space as the color feature quantity. In addition, the extracting unit 3 may extract, for example, the HOG feature quantity or the LBP feature quantity as the intensity gradient feature quantity. When the selecting unit 6 instructs the extraction of only either of the color feature quantity or the intensity gradient feature quantity, as described hereafter, the extracting unit 3 may extract only either of the color feature quantity or the intensity gradient feature quantity at step S1102. The extracting unit 3 then outputs the extracted color feature quantity or the intensity gradient feature quantity to the detecting unit 5.

The detecting unit 5 receives, from the extracting unit 3, the color feature quantity or the intensity gradient feature quantity extracted by the extracting unit 3. The detecting unit 5 detects the first region based on the color feature quantity or the intensity gradient feature quantity (step S1103). At step S1103, the detecting unit 5 detects the first region using the color feature quantity or the intensity gradient feature quantity based on the selection by the selecting unit 6. In addition, the detecting unit 5 may detect the fingertip position of the hand and fingers serving as an example of the first region, as occasion calls.

The selecting unit 6 selects whether the detecting unit 5 detects the hand and fingers using either the color feature quantity or the intensity gradient feature quantity based on the first information, and instructs the detecting unit 5 (step S1104). In addition, at step S1104, the selecting unit 6 may instruct the extracting unit 3 to extract only either of the color feature quantity or the intensity gradient feature quantity, as appropriate. A detailed flow of the process at step S1104 corresponds with the flowcharts in FIGs. 6 and 10.

In the image processing device in example 1, the position of the hand and fingers of the user is able to be accurately identified without depending on the background color. Furthermore, through dynamic selection of the color feature quantity and the intensity gradient feature quantity depending on various circumstances, the position of the hand and fingers of the user is able to be detected with high robustness and low calculation load without depending on the background color.

(Example 2)

In example 2, a method is disclosed in which calculation load is reduced and processing speed is improved by a scanning range for the intensity gradient feature quantity by the detecting unit 5 in FIG. 1 being restricted. When the intensity gradient feature quantity is used, the detecting unit 5 preferably reduces the number of times the intensity gradient feature quantity is extracted and the number of times determination is made using the first feature quantity model (classifier) as much as possible to reduce calculation load. Therefore, when setting a search area of the rectangular area in intensity gradient feature quantity mode, the detecting unit 5 restricts the search area based on the change quantity of the finger vectors. Specifically, when the change quantity var $(V_{n,t}, V_{n,t-1})$ of the finger vectors at certain preceding and subsequent times is a predetermined threshold $\theta_s$ or less, the detecting unit 5 calculates a movement speed VG of the center-of-gravity position of the hand at the preceding and subsequent times. For example, when the center of gravity of the hand is $G_t=(x_t,y_t)$ and $G_{t-1}=(x_{t-1},y_{t-1})$, the movement speed is VG=$G_t$-$G_{t-1}$. In this instance, the detecting unit 5 restricts the rectangular area to be searched to only an area moved by an amount equivalent to the speed VG from the area of the hand and fingers at the preceding time. In addition, as a process for supporting rotation movement, the detecting unit 5 restricts the rotation of the image to a range $\alpha$ expressed by a following expression.

$$\alpha(V_{n,t}, V_{n,t-1}) = \arctan V_{n,t-1} \pm \arccos\left(\frac{V_{n,t} \cdot V_{n,t-1}}{\left|V_{n,t}\right|\left|V_{n,t-1}\right|}\right) \quad \text{.... (3)}$$

When the movement amount of the finger vector at the preceding and subsequent times is low, the position of the hand and fingers has not significantly changed from the preceding time. Therefore, as a result of the range of the rectangular area and the rotation area being restricted as described above, the search area is able to be significantly reduced. Furthermore, in example 2, the search area is restricted using the center-of-gravity position rather than the fingertip position. A reason for this is that, in example 2, the center of gravity is calculated from the extracted skin-tone area. At this time, because a skin-tone area of a fixed size or larger is extracted, the center of gravity is acquired with relative stability. On the other hand, the fingertip position is estimated from the extracted skin-tone area based on a curvature of the contour. Therefore, depending on the state of the contour, a situation in which the position of the fingertip is difficult to stably acquire may occur. In the image processing device 1 in example 2, the search area is restricted using the center-of-gravity position rather than the fingertip position. Therefore, operation stability is realized.

In the image processing device in example 2, the position of the hand and fingers of the user is able to be accurately identified without depending on the background color. Furthermore, through dynamic selection of the color feature quantity and the intensity gradient feature quantity depending on various circumstances, the position of the hand and fingers of the user is able to be detected with high robustness and low calculation load without depending on the background color.

(Example 3)

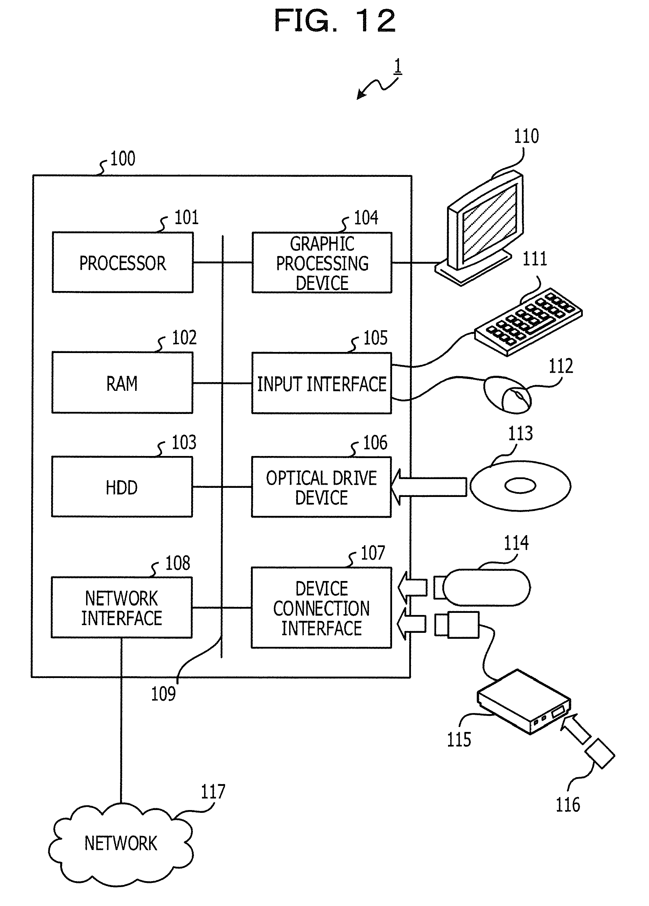

FIG. 12 is a hardware configuration diagram of a computer that functions as the image processing device 1 according to the embodiment. As illustrated in FIG. 12, the image processing device 1 includes a computer 100 and input and output devices (peripheral devices) that are connected to the computer 100.

The overall computer 100 is controlled by a processor 101. A random access memory (RAM) 102 and a plurality of peripheral devices are connected to the processor 101 by a bus 109. The processor 101 may be a multi-processor. In addition, the processor 101 is, for example, a CPU, a microprocessing unit (MPU), a digital signal processor (DSP), an application specific integrated circuit (ASIC), or a programmable logic device (PLD). Furthermore, the processor 101 may be a combination of two or more elements among the CPU, MPU, DSP, ASIC, and PLD.

The RAM 102 is used as a main storage device of the computer 100. The RAM 102 temporary stores therein an operating system (OS) program and at least some application programs executed by the processor 101. In addition, the RAM 102 stores therein various pieces of data to be used for processes performed by the processor 101.

The peripheral devices connected to the bus 109 are a hard disk drive (HDD) 103, a graphic processing device 104, an input interface 105, an optical drive device 106, a device connection interface 107, and a network interface 108.

The HDD 103 magnetically writes and reads out data onto and from a magnetic disk provided therein. The HDD 103 is, for example, used as an auxiliary storage device of the computer 1000. The HDD 103 stores therein an OS program, application programs, and various pieces of data. As the auxiliary storage device, a semiconductor device such as a flash memory may also be used.

A monitor 110 is connected to the graphic processing device 104. The graphic processing device 104 displays various images on the screen of the monitor 110 based on instructions from the processor 101. The monitor 110 is a display device using cathode ray tube (CRT), a liquid crystal display device, or the like.

A keyboard 111 and a mouse 112 are connected to the input interface 105. The input interface 105 transmits to the processor 101 signals transmitted from the keyboard 111 and the mouse 112. The mouse 112 is an example of a pointing device, and other pointing devices may be used. Other pointing devices are a touch panel, a tablet, a touchpad, a trackball, and the like.

The optical drive device 106 reads out data recorded on an optical disc 113 using a laser light or the like. The optical disc 113 is a portable recording medium on which data is recorded such as to be readable by reflection of light. The optical disc 113 is a digital versatile disc (DVD), a DVD-RAM, a compact disc read-only memory (CD-ROM), a CD-recordable/rewritable (CD-R/RW), or the like. Programs stored on the optical disc 113 which is a portable recording medium is installed on the image processing device 1 via the optical drive device 106. A predetermined installed program is executable by the image processing device 1.

The device connection interface 107 is a communication interface for connecting peripheral devices to the computer 100. For example, a memory device 114 and a memory reader/writer 115 may be connected to the device connection interface 107. The memory device 114 is a recording medium provided with a communication function for communicating with the device connection interface 107. The memory reader/writer 115 is a device that writes data onto a memory card 116 or reads out data from the memory card 116. The memory card 116 is a card-type recording medium.

The network interface 108 is connected to a network 117. The network interface 108 performs transmission and reception of data with another computer or a communication device, over the network 117.

For example, the computer 100 executes a program recorded on a computer-readable recording medium and actualizes the above-described image processing functions. A program in which the processing content performed by the computer 100 is written may be recorded on various recording mediums. The program may be configured by one or a plurality of functional modules. For example, the program may be configured by functional modules actualizing the processes performed by the acquiring unit 2, the extracting unit 3, the storage unit 4, the detecting unit 5, and the selecting unit 6 illustrated in FIG. 1. The programs to be executed by the computer 100 may be stored in the HDD 103. The processor 101 loads at least some of the programs in the HDD 103 onto the RAM 102 and executes the programs. In addition, the programs to be executed by the computer 100 may be recorded on a portable recording medium, such as the optical disc 113, the memory device 114, or the memory card 116. For example, the programs stored in the portable recording medium are able to be executed after being installed on the HDD 103 under the control of the processor 101. In addition, the processor 101 may read out and execute the programs directly from the portable recording medium.

Each constituent element of each device that has been illustrated does not have to be physically configured as illustrated. In other words, specific examples of dispersion and integration of the devices is not limited to those illustrated. All or some of the devices may be configured to be functionally or physically dispersed or integrated in arbitrary units depending on various loads, usage conditions, and the like. In addition, the various processes described in the above-described examples may be actualized by programs that have been prepared in advance being executed by a computer, such as a personal computer or a workstation.

Furthermore, the image sensor, such as the CCD or the CMOS, is described giving an external device as an example. However, the present embodiment is not limited thereto. The image processing device may include the image sensor.

According to the present embodiment, an example in which the hand and fingers are skin tone and the background is similar to the skin tone is described. However, the present embodiment is not limited thereto. For example, the present embodiment is able to be applied even when the hand and fingers are covered by a glove or the like, and a color similar to the color of the glove is used in the background.

**Claims**

1. An image processing device, includes a computer processor, the device comprising:

   an acquiring unit configured to acquire an image including a first region of a user;
   an extracting unit configured to extract a color feature quantity or an intensity gradient feature quantity from the image:

   a detecting unit configured to detect the first region based on the color feature quantity or the intensity gradient feature quantity; and
   a selecting unit configured to select whether the detecting unit detects the first region using either the color feature quantity or the intensity gradient feature quantity, based on first information related to the speed of movement of the first region calculated from a comparison of the first regions in a plurality of images acquired at different times.

2. The device according to claim 1,
   wherein the selecting unit selects the color feature quantity when the first information is less than a predetermined first threshold within a third time that is prescribed by a first time and a second time that are the different times, and selects the intensity gradient feature quantity when the first information is the first threshold or higher.

3. The device according to claim 2,
   wherein the selecting unit determines that, when the first information is the first threshold or higher, the color feature quantity of a background area of the image other than the first region has similarity to the color feature quantity of the first region and the background area and the first region are overlapping, and selects the intensity gradient feature quantity.

4. The device according to claim 2,
   wherein the first region is a hand and fingers, and
   wherein the selecting unit selects whether the first region is detected using either the color feature quantity or the intensity gradient feature quantity based on a movement amount of the hand and fingers within the third time.

5. The device according to claim 2,
   wherein the first region is a hand and fingers, and
   wherein the selecting unit selects whether the first region is detected using either the color feature quantity or the intensity gradient feature quantity based on a movement amount of a plurality of vectors set in the length direction of the hand and fingers and calculated within the third time.

6. The device according to claim 4,
   wherein the third time is a time difference between the first time and the second time, and
   wherein the first threshold is the movement amount of the user during the time difference that is measured in advance.

7. The device according to claim 4,
   wherein the detecting unit sets an extraction area for the intensity gradient feature quantity based on the movement amount.

8. The device according to claim 1, further comprising:

   a storage unit configured to store a first feature quantity model in which the feature quantity of the first region is extracted in advance;
   wherein the detecting unit detects, as the first region, an object included in the image of which a degree of similarity with the first feature quantity model is a predetermined second threshold or higher.

9. An image processing method comprising:

   acquiring an image including a first region of a user;
   extracting a color feature quantity or an intensity gradient feature quantity from the image;
   detecting the first region based on the color feature quantity or the intensity gradient feature quantity; and
   selecting whether the detecting is detecting the first region using either the color feature quantity or the intensity gradient feature quantity, based on first information related to the speed of movement of the first region calculated from a comparison of the first regions in a plurality of images acquired at different times.

10. The method according to claim 9,
wherein the selecting is selecting the color feature quantity when the first information is less than a predetermined first threshold within a third time that is prescribed by a first time and a second time that are the different times, and selecting the intensity gradient feature quantity when the first information is the first threshold or higher.

11. The method according to claim 10,
wherein the selecting is determining that, when the first information is the first threshold or higher, the color feature quantity of a background area of the image other than the first region has similarity to the color feature quantity of the first region and the background area and the first region are overlapping, and selecting the intensity gradient feature quantity.

12. The method according to claim 10,
wherein the first region is a hand and fingers, and
wherein the selecting is selecting whether the first region is detected using either the color feature quantity or the intensity gradient feature quantity based on a movement amount of the hand and fingers within the third time.

13. The method according to claim 10,
wherein the first region is a hand and fingers, and
wherein the selecting is selecting whether the first region is detected using either the color feature quantity or the intensity gradient feature quantity based on a movement amount of a plurality of vectors set in the length direction of the hand and fingers and calculated within the third time.

14. The method according to claim 12,
wherein the third time is a time difference between the first time and the second time, and
wherein the first threshold is the movement amount of the user during the time difference that is measured in advance.

15. A computer-readable storage medium storing an image processing program that causes a computer to execute a process comprising:

acquiring an image including a first region of a user;
extracting a color feature quantity or an intensity gradient feature quantity from the image;
detecting the first region based on the color feature quantity or the intensity gradient feature quantity; and
selecting whether the detecting is detecting the first region using either the color feature quantity or the intensity gradient feature quantity, based on first information related to the speed of movement of the first region calculated from a comparison of the first regions in a plurality of images acquired at different times.

# FIG. 1

*1*

*2* ACQUIRING UNIT

*3* EXTRACTING UNIT

*5* DETECTING UNIT

*4* STORAGE UNIT

*6* SELECTING UNIT

# FIG. 2

COORDINATE ORIGIN

x

BLOCK 1 | BLOCK 2 | ... | FINGERTIP POSITION

y

BLOCK n | ...

FINGER BASE POSITION

# FIG. 3

30

| FINGER BASE POSITION (x,y) | FINGERTIP POSITION (x,y) | FINGERTIP DIRECTION (deg.) | HOG FEATURE QUANTITY | | |
|---|---|---|---|---|---|
| (20,80) | (20,20) | 0 | BLOCK 1 | STRENGTH OF INTENSITY GRADIENT 1 | 3 |
| | | | | STRENGTH OF INTENSITY GRADIENT 2 | 24 |
| | | | | STRENGTH OF INTENSITY GRADIENT 3 | 15 |
| | | | | . . . | . . . |
| | | | | STRENGTH OF INTENSITY GRADIENT 9 | 10 |
| | | | BLOCK 2 | STRENGTH OF INTENSITY GRADIENT 1 | 1 |
| | | | | STRENGTH OF INTENSITY GRADIENT 2 | 5 |
| | | | | STRENGTH OF INTENSITY GRADIENT 3 | 53 |
| | | | | . . . | . . . |
| | | | | STRENGTH OF INTENSITY GRADIENT 9 | 30 |
| | | | . . . | . . . | . . . |
| | | | BLOCK n | STRENGTH OF INTENSITY GRADIENT 1 | 20 |
| | | | | STRENGTH OF INTENSITY GRADIENT 2 | 4 |
| | | | | STRENGTH OF INTENSITY GRADIENT 3 | 6 |
| | | | | . . . | . . . |
| | | | | STRENGTH OF INTENSITY GRADIENT 9 | 13 |

# FIG. 4

| FINGER ID | FINGER COORDINATES [pixel] | CENTER OF GRAVITY [pixel] |
|-----------|---------------------------|---------------------------|
| 1 | (210,260) | |
| 2 | (230,230) | |
| 3 | (240,200) | (245,350) |
| 4 | (250,220) | |
| 5 | (265,255) | |

_40

# FIG. 5A

---- : DETECTED FIRST REGION  ——— : FIRST REGION  : SKIN-TONE AREA

$t_0$      $t_0+0.03$      $t_0+0.06$      TIME [sec]

# FIG. 5B

$t_0$      $t_0+0.03$      TIME [sec]

EP 2 840 527 A1

# FIG. 6

```
                    ┌─────────────┐
                    │    START    │
                    └──────┬──────┘
                           │
                           ▼           S601
              ╱────────────────────────╲
             ╱    IS FINGER INCREASED    ╲        NO
            ╱  OR DECREASED DURING FIXED  ╲────────────┐
            ╲        AMOUNT OF TIME?      ╱            │
             ╲                           ╱             ▼          S603
              ╲─────────────────────────╱     ╱────────────────────────╲
                           │                 ╱     IS MOVEMENT AMOUNT    ╲     NO
                          YES               ╱  OF FINGER VECTOR THRESHOLD ╲───────┐
                           │                ╲         OR HIGHER?          ╱       │
                           │                 ╲                           ╱        │
                           │                  ╲─────────────────────────╱         │
                           │                           │                          │
                           │◄─────────────────────────YES                         │
                           │                                                      │
                           ▼          S602                              ▼         S604
              ┌───────────────────────────┐            ┌───────────────────────────┐
              │  SELECT INTENSITY GRADIENT │            │   CONTINUE SELECTION OF    │
              │     FEATURE QUANTITY       │            │   COLOR FEATURE QUANTITY   │
              └─────────────┬─────────────┘            └─────────────┬─────────────┘
                            │                                        │
                            ▼◄───────────────────────────────────────┘
                    ┌─────────────┐
                    │     END     │
                    └─────────────┘
```

# FIG. 7

_70_

| FRAME NUMBER | TRUE VALUE OF NUMBER OF FINGERS | ESTIMATED VALUE OF NUMBER OF FINGERS | SELECTED FEATURE QUANTITY |
|---|---|---|---|
| t (CURRENT TIME) | 1 | 1 | INTENSITY GRADIENT FEATURE QUANTITY |
| t-1 | 1 | 1 | INTENSITY GRADIENT FEATURE QUANTITY |
| t-2 | 1 | 1 | INTENSITY GRADIENT FEATURE QUANTITY |
| t-3 | 1 | 1 | INTENSITY GRADIENT FEATURE QUANTITY |
| t-4 | 1 | 1 | INTENSITY GRADIENT FEATURE QUANTITY |
| t-5 | 1 | 2 | COLOR FEATURE QUANTITY |
| t-6 | 1 | 1 | COLOR FEATURE QUANTITY |
| t-7 | 1 | 1 | COLOR FEATURE QUANTITY |
| t-8 | 0 | 0 | COLOR FEATURE QUANTITY |
| t-9 | 0 | 0 | COLOR FEATURE QUANTITY |

# FIG. 8

80

| FRAME NUMBER | FINGER ID (n) | | | |
|---|---|---|---|---|
| | 1 | 2 | 3 | . . . |
| t,t-1 | 0.13 | 0.12 | . . . | . . . |
| t-1,t-2 | 0.15 | 0.13 | . . . | . . . |
| t-2,t-3 | 0.11 | 0.13 | . . . | . . . |
| t-3,t-4 | 0.10 | . . . | . . . | . . . |
| t-4,t-5 | 0.21 | . . . | . . . | . . . |
| t-5,t-6 | 0.08 | . . . | . . . | . . . |
| t-6,t-7 | 0.12 | . . . | . . . | . . . |
| t-7,t-8 | 0.16 | . . . | . . . | . . . |
| t-8,t-9 | . . . | . . . | . . . | . . . |

# FIG. 9

| FRAME NUMBER | TRUE VALUE OF NUMBER OF FINGERS | ESTIMATED VALUE OF NUMBER OF FINGERS | SELECTED FEATURE QUANTITY | VECTOR CHANGE QUANTITY var | | | |
|---|---|---|---|---|---|---|---|
| | | | | FINGER ID (n) | | | |
| | | | | 1 | 2 | 3 | ··· |
| t (CURRENT TIME) | 2 | 2 | INTENSITY GRADIENT FEATURE QUANTITY | 0.05 | 0.70 | ··· | ··· |
| t-1 | 2 | 2 | INTENSITY GRADIENT FEATURE QUANTITY | 0.08 | 0.21 | ··· | ··· |
| t-2 | 2 | 2 | INTENSITY GRADIENT FEATURE QUANTITY | 0.11 | 0.59 | ··· | ··· |
| t-3 | 2 | 2 | INTENSITY GRADIENT FEATURE QUANTITY | 0.20 | 0.80 | ··· | ··· |
| t-4 | 2 | 2 | COLOR FEATURE QUANTITY | 0.19 | 0.19 | ··· | ··· |
| t-5 | 2 | 2 | COLOR FEATURE QUANTITY | 0.11 | 0.11 | ··· | ··· |
| t-6 | 2 | 2 | COLOR FEATURE QUANTITY | 0.13 | 0.13 | ··· | ··· |
| t-7 | 2 | 2 | COLOR FEATURE QUANTITY | 0.16 | 0.16 | ··· | ··· |
| t-8 | 2 | 2 | COLOR FEATURE QUANTITY | 0.09 | 0.09 | ··· | ··· |
| t-9 | 2 | 2 | COLOR FEATURE QUANTITY | ··· | ··· | ··· | ··· |

90

# FIG. 10

```
                    START

                      │
                      ▼
                              S1001
              ╱─────────────────╲
            ╱   IS FINGER INCREASED ╲        NO
          ╱  OR DECREASED DURING FIXED AMOUNT ╲──────────────┐
           ╲        OF TIME?      ╱                          │
             ╲─────────────────╱                             │
                      │ YES                                  │
                      ▼                                       │
                              S1002                           │
              ╱─────────────────╲                            │
            ╱   IS MOVEMENT AMOUNT  ╲       NO                │
          ╱  OF FINGER VECTOR THRESHOLD OR ╲─────────────────┤
           ╲        HIGHER?       ╱                          │
             ╲─────────────────╱                             │
                      │ YES    S1003                         ▼  S1004
                      ▼                          ┌─────────────────────────────┐
  ┌──────────────────────────────────┐          │ CONTINUE SELECTION OF INTENSITY │
  │ SELECT COLOR FEATURE QUANTITY MODE │          │ GRADIENT FEATURE QUANTITY MODE  │
  └──────────────────────────────────┘          └─────────────────────────────┘
                      │                                       │
                      ▼◄──────────────────────────────────────┘
                    END
```

# FIG. 11

```
                    ┌─────────────┐
                    │    START    │
                    └─────────────┘
                           │
                           ▼        ⌐ S1101
                    ╱─────────────╲
                   ╱               ╲              NO
                  ╱  IS IMAGE       ╲───────────────────────┐
                  ╲  ACQUIRED?      ╱                        │
                   ╲               ╱                         │
                    ╲─────────────╱                          │
                           │ YES                             │
                           ▼                                 │
        ┌──────────────────────────────────────┐            │
        │ EXTRACT COLOR FEATURE QUANTITY OR     │ ~ S1102    │
        │ INTENSITY GRADIENT FEATURE QUANTITY   │            │
        └──────────────────────────────────────┘            │
      ┌──────────────────►│                                  │
      │                   ▼                                  │
      │ ┌──────────────────────────────────────┐            │
      │ │        DETECT FIRST REGION            │ ~ S1103    │
      │ └──────────────────────────────────────┘            │
      │                   │                                  │
      │                   ▼                                  │
      │ ┌──────────────────────────────────────┐            │
      │ │       SELECT FEATURE QUANTITY         │ ~ S1104    │
      │ └──────────────────────────────────────┘            │
      │                   │                                  │
      └───────────────────┘                                 │
                           ▼                                 │
                    ┌─────────────┐◄────────────────────────┘
                    │     END     │
                    └─────────────┘
```

# FIG. 12

_1_

100

101 PROCESSOR

104 GRAPHIC PROCESSING DEVICE

110

111

102 RAM

105 INPUT INTERFACE

112

103 HDD

106 OPTICAL DRIVE DEVICE

113

108 NETWORK INTERFACE

107 DEVICE CONNECTION INTERFACE

114

109

115

116

117 NETWORK

Europäisches
Patentamt

European
Patent Office

Office européen
des brevets

# EUROPEAN SEARCH REPORT

Application Number

EP 14 17 0756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DENNIS MITZEL ET AL: "Real-Time Multi-Person Tracking with Time-Constrained Detection", PROCEDINGS OF THE BRITISH MACHINE VISION CONFERENCE 2011, 1 January 2011 (2011-01-01), pages 104.1-104.11, XP055139622, DOI: 10.5244/C.25.104 ISBN: 978-1-90-172543-8 * page 1, paragraphs 1 Introduction, first sentence * * page 6, line 10 * * page 7, line 7 - line 9 * * page 7, line 16 - line 17 * * page 7, line 21 - line 22 * * page 7, line 26 - line 28 * ----- -/-- | 1,2,9,10 | INV. G06K9/00 |

TECHNICAL FIELDS
SEARCHED        (IPC)

G06K

The present search report has been drawn up for all claims

| Place of search | Date of completion of the search | Examiner |
|---|---|---|
| The Hague | 2 October 2014 | Sagrebin-Mitzel, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 14 17 0756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANG SHA ET AL: "Hand posture recognition in video using multiple cues", MULTIMEDIA AND EXPO, 2009. ICME 2009. IEEE INTERNATIONAL CONFERENCE ON, IEEE, PISCATAWAY, NJ, USA, 28 June 2009 (2009-06-28), pages 886-889, XP031510893, DOI: 10.1109/ICME.2009.5202637 ISBN: 978-1-4244-4290-4 * page 886, right-hand column, line 14 - line 18 * * page 886, right-hand column, line 23 - line 27 * * page 888, left-hand column, line 23 * * page 887, left-hand column, line 1 - line 5 * * page 887, left-hand column, line 44 - line 49 * * page 887, right-hand column, line 6 - line 7 * * page 887, right-hand column, line 31 - line 33 * * page 889, left-hand column, line 26 - line 30 * * figure 1 * | 1,2, 4-10, 12-15 | |
| A | LEIBE B ET AL: "Coupled Object Detection and Tracking from Static Cameras and Moving Vehicles", IEEE TRANSACTIONS ON PATTERN ANALYSIS AND MACHINE INTELLIGENCE, IEEE COMPUTER SOCIETY, USA, vol. 30, no. 10, 1 October 2008 (2008-10-01), pages 1683-1698, XP011247537, ISSN: 0162-8828 * page 1, right-hand column, lines 15 and 17-19 * | 1,9 | TECHNICAL FIELDS SEARCHED (IPC) |

-----

-----

-/--

The present search report has been drawn up for all claims

| Place of search | Date of completion of the search | Examiner |
|---|---|---|
| The Hague | 2 October 2014 | Sagrebin-Mitzel, M |

EPO FORM 1503 03.82 (P04C01)

Europäisches
Patentamt

European
Patent Office

Office européen
des brevets

## EUROPEAN SEARCH REPORT

Application Number

EP 14 17 0756

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALPER YILMAZ ET AL: "Object tracking", ACM COMPUTING SURVEYS, vol. 38, no. 4, 25 December 2006 (2006-12-25), pages 13-es, XP055053833, ISSN: 0360-0300, DOI: 10.1145/1177352.1177355 * page 7, paragraphs 4. Object Detection, first sentence * | 1,9 | |
| A | US 2012/027252 A1 (LIU MING-CHANG [US] ET AL) 2 February 2012 (2012-02-02) * figures 4, 5 * * paragraphs [0030], [0033], [0037], [0040], [0046], [0056] * | 1-15 | |
| A | US 2012/068920 A1 (AHN JI-YOUNG [KR] ET AL) 22 March 2012 (2012-03-22) * figure 2 * | 1-15 | |

TECHNICAL FIELDS
SEARCHED        (IPC)

The present search report has been drawn up for all claims

| Place of search | Date of completion of the search | Examiner |
|---|---|---|
| The Hague | 2 October 2014 | Sagrebin-Mitzel, M |

EPO FORM 1503 03.82 (P04C01)

**ANNEX TO THE EUROPEAN SEARCH REPORT
ON EUROPEAN PATENT APPLICATION NO.**                    EP 14 17 0756

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2014

| Patent document cited in search report | Publication date | Patent family member(s) | Publication date |
|---|---|---|---|
| US 2012027252 A1 | 02-02-2012 | NONE | |
| US 2012068920 A1 | 22-03-2012 | KR 20120029738 A | 27-03-2012 |
| | | TW 201214336 A | 01-04-2012 |
| | | US 2012068920 A1 | 22-03-2012 |

EPO FORM P0459

For more details about this annex : see Official Journal of the European Patent Office, No. 12/82

## REFERENCES CITED IN THE DESCRIPTION

**Patent documents cited in the description**

- JP 3863809 B

**Non-patent literature cited in the description**

- Survey on Skin Tone Detection using Color Spaces. **PREMA et al.** International Journal of Applied Information Systems. Foundation of Computer Science, May 2012, vol. 2, 18-26

- **N. DALAL et al.** Histograms of Oriented Gradients for Human Detection. *2005 IEEE Computer Society Conference on Computer Vision and Pattern Recognition (CVPR),* 2005